# EUROPÄISCHE PATENTANMELDUNG

(11) **EP 1 264 871 A1**
(43) Veröffentlichungstag der Anmeldung: **11.12.2002**
(21) Anmeldenummer: 02011318.9
(22) Anmeldetag: 23.05.2002
(51) Int. Cl.: C09J 7/02, C09J 7/04, C08K 5/00, B32B 27/12, B60J 11/00

(54) **Selbstklebender Schutzartikel für mechanisch stark beanspruchte lackierte Automobilteile**

(30) Priorität: 06.06.2001 DE 10127325
(71) Anmelder: Tesa AG, 20253 Hamburg (DE)
(72) Erfinder: Böhm, Nicolai, Dr., 20257 Hamburg (DE); Klemp, Jobst-Waldemar, 22869 Schenefeld (DE); Wappler, Ulrike, 20253 Hamburg (DE); Schütz, Ingolf, 20253 Hamburg (DE)

(57) **Zusammenfassung**

Selbstklebeartikel zum mechanischen Schutz von lackierten Kunststoffanbauteilen von Automobilen mit einem folienförmigen Trägermaterial, dessen Außenseite mit einer textilen Schicht aus Maschenware kaschiert ist und dessen Innenseite durch Aufbringen einer Selbstklebemasse haftklebrig ausgerüstet ist.

## Beschreibung

Die Erfindung betrifft einen Selbstklebeartikel zum Transportschutz von lackierten Automobilteilen wie insbesondere Stoßfängem, die mechanisch stark beansprucht werden.

Die Lackierung von Automobilkunststoffteilen wie Stoßfängern oder Rückspiegelschalen in der Wagenfarbe gehören heutzutage zum Standard bei der zeitgemäßen optischen Gestaltung moderner Kraftfahrzeuge. Dies bringt mit sich, daß diese Teile sehr empfindlich gegen Zerkratzen sind. Gerade die Stoßfänger und die Rückspiegel sind exponierte Teile des Autos, die sehr leicht touchiert werden können. Dem gestiegenen Qualitätsbewußtsein der Kunden müssen die Automobilhersteller daher in der Weise Rechnung tragen, daß diese Teile auf dem Weg vom Lackieren über die Montage im Automobilwerk bis zur Auslieferung an den Kunden gut geschützt werden, um Reklamationen im Vorweg zu vermeiden.

Man hat daher in den letzten Jahren versucht, die bei frisch lackierten Blechteilen mit Erfolg angewendete Methode des Maskierens mit speziellen lackverträglichen Transportschutzfolien, wie sie zum Beispiel in DE 195 32 220 A1 oder in EP 0 827 526 A1 beschrieben sind, auf Stoßfänger zu übertragen.
Dieses erwies sich bei Stoßfängem als problematisch, da diese beim Rangieren der Automobile den häufig auftretenden starken Beanspruchungen durch Entlangschrammen und leichte Kollisionen nicht gewachsen sind und keine ausreichende Schutzwirkung vermitteln. Zudem lassen sich die relativ steifen Folien auf den stark gewölbten Verklebungsgeometrien der Stoßfänger und Spiegelschalen nur sehr faltig verkleben, was häufig, besonders begünstigt durch eventuelles allmähliches Ausgasen von Lösungsmitteln aus dem Stoßfängerkunststoff, zu irreversiblen Abdrücken der Faltenstruktur in den empfindlichen Lack führt.
Eine verbesserte Schutzwirkung gegen Stoßbelastungen haben dagegen auf die Stoßfänger geklebte Polster aus Schaumstoff. Schäume zeigen allerdings bei schrammender Kollision zum Beispiel an Betonpfählen nur eine geringe mechanische Resistenz.
Das Hauptproblem liegt hier aber eher in der sicheren Verklebung. Die Praxis hat gezeigt, daß die Polster häufig schon unter Regeneinfluß abfallen und damit zum einen keine Schutzwirkung mehr entfalten und zum anderen die Umwelt verschmutzen. Verklebungssicherere Klebstoffe erweisen sich in der Regel als nicht lackverträglich, so daß man Deformationen in Kauf nehmen muß.

In DE 197 16 712 A1 ist für den Stoßfängerschutz ein Abdeckmaterial auf Gewebebasis offengelegt, das mit einer Polyisobutylenselbstklebemasse ausgerüstet ist. Zwar hat ein solches Band eine gute mechanische Schutzwirkung, aber ein offenes Gewebe bietet keinen Schutz gegen chemische Störeinflüsse wie sie Betriebsflüssigkeiten, zum Beispiel Kraftstoff, Batteriesäure oder Bremsflüssigkeit, ausüben. Auch kann sich ein solches Gewebe mit Wasser vollsaugen und den empfindlichen Lack über einen langen Zeitraum anquellen. Den schwerwiegendsten Einfluß übt jedoch die Gewebestruktur aus, die sich auf dem dünnen Klebmassefilm abbildet und bei besonders frischen und empfindlichen Lacken irreversible Abdrücke des Gewebemusters hervorrufen kann.

In EP 0 959 119 A1 wird ein selbstklebender Schutzartikel beschrieben, der aus einem FolienNlieslaminat besteht. Zwar weist ein solcher Artikel eine gute Schutzwirkung gegen Reibbelastungen und eine gute Dichtigkeit gegen flüssige Kontaminanten auf. Vliese wie dort ausgeführt sind im allgemeinen aber wenig dehnfähig, weshalb ein solchermaßen beanspruchtes Laminat nur sehr faltig aufzubringen und somit äußerst lackunverträglich ist.

Aufgabe der Erfindung ist es, einen Transportschutzartikel für Stoßfänger und andere lackierte Kunststoffanbauteile für Automobile zur Verfügung zu stellen, der die Nachteile des Standes der Technik nicht oder nicht in dem Maße zeigt. Insbesondere soll der Artikel einerseits gut anschmiegsam an gewölbte Oberflächen, andererseits flüssigkeitsdicht gegen Wasser und Kraftfahrzeugbetriebsmittel (etwa Benzin, Diesel, Bremsflüssigkeit) bei einer großen Abriebbeständigkeit sein und somit eine hervorragende mechanische Schutzwirkung mit einer ausgezeichneten Lackverträglichkeit auf dem besonders empfindlichen Lack solcher Teile verbinden.

Gelöst wird diese Aufgabe durch einen Selbstklebeartikel, wie er im Hauptanspruch niedergelegt ist. Gegenstand der Unteransprüche sind dabei vorteilhafte Weiterbildungen des Schutzartikels sowie besondere Anwendungsmöglichkeiten.

Demgemäß betrifft die Erfindung einen lackverträglichen Selbstklebeartikel zum mechanischen Schutz von lackierten Kunststoffanbauteilen von Automobilen mit einem folienförmigen Trägermaterial, dessen Außenseite mit einer textilen Schicht aus Maschenware kaschiert ist und dessen Innenseite durch Aufbringen einer Selbstklebemasse haftklebrig ausgerüstet ist.

In einer bevorzugten Ausführungsform besteht der Schutzartikel aus einer UV-stabilisierten polyolefinischen, ungereckten Folie als Trägermaterial, wobei die Folie ein Young'sches Modul von weniger 300 N/mm², bevorzugt weniger 150 N/mm², und eine Dicke von 10 bis 150 µm, bevorzugt 40 bis 100 µm, zeigt.

Die erfindungsgemäße Folie ist oberseitig kaschiert mit einer Maschenware, die vorteilhaft ein Flächengewicht von 10 bis 200 g/m² aufweist, bevorzugt von 20 bis 80 g/m²

Weiter vorzugsweise ist die Folie unterseitig mit 10 bis 80 g/m², bevorzugt 15 bis 40 g/m², einer Selbstklebemasse beschichtet.

Geeignete Materialien für die Trägerfolie sind prinzipiell alle polymeren Stoffe, aus denen sich Folien mit einem geringen Young'schen Modul herstellen lassen wie Polyolefine, Polyurethane oder Weich-PVC.
Bevorzugt einsetzbar sind Polyolefine geringer Dichte, mit denen der erfindungsgemäße Young'sche Modulbereich erzielbar ist. Dafür kommen verschiedenste Copolymere von Ethylen mit α-Olefinen wie typischerweise Propylen, 1-Buten, 1-Hexen oder 1-Octen (vorwiegend LLDPE, VLDPE, ULDPE), aber auch Ethylen-Styrol-Copolymere sowie Copolymere des Propylens mit Ethylen und α-Olefinen in Betracht, so auch EPDM und EPM-Kautschuke. Ebenfalls gut geeignet sind gesättigte synthetische Kautschuke wie Polyethylenvinylacetat (EVM), hydrierte Nitrilkautschuke sowie styrolhaltige synthetische Kautschuke wie SEBS und SEPS, da diese im Gegensatz zu den ungesättigten Varianten, eingeschlossen Naturkautschuk, eine gute Witterungsbeständigkeit aufweisen. Ferner können halogenhaltige Polymere wie chloriertes Polyethylen oder Chloropren Verwendung finden.
Bevorzugt werden Mischungen verschiedener geeigneter Polyolefine verwendet, um die mechanischen und thermischen Eigenschaften sowie Verarbeitbarkeit, Verankerung des Klebers usw. optimal einstellen zu können.

Um die Weichheit eines geeigneten Materials und die Dämpfung gegen Stoßbelastungen weiter zu steigern, kann die Folie auch zusätzlich geschäumt werden.

Um der Trägerfolie die geforderte Witterungsstabilität zu geben, ist der Zusatz von Lichtschutzmitteln zu bevorzugen. Ihre Funktion besteht vorrangig in der Vermeidung der Versprödung der Trägerfolie.
Derartige Lichtschutzmittel sind bei Gaechter und Müller, Taschenbuch der Kunststoff-Additive, München 1979, bei Kirk-Othmer (3.) 23,.615 - 627, bei Encycl. Polym. Sci. Technol. 14, 125- 148 und bei Ullmann (4.) 8, 21; 15, 529, 676 beschrieben. Insbesondere HALS-Lichtschutzmittel sind für die erfindungsgemäße Schutzfolie geeignet.
Die Menge des Lichtschutzmittels sollte mindestens 0,15 Gew.-%, vorzugsweise mindestens 0,30 Gew.-% bezogen auf die Trägerfolie betragen.
Eine zusätzliche Verbesserung der Lichtstabilität der Trägerfolie ist auch durch Zusatz von Titandioxid möglich. Vorteilhaft bezüglich der mechanischen Eigenschaften und der Homogenität des Weißgrades sind 5 bis 15 Gew.-% Titandioxidzusatz.
Vorzugsweise liegt die UV-Durchlässigkeit der Schutzfolie im Bereich von 290 bis 360 nm durch das Zusammenwirken von Lichtschutzmitteln und Pigmenten unter ca. 1 %, vorzugsweise unter ca. 0,1 %.

Aus optischen Gründen kann die Folie auch farbig pigmentiert sein.

Bei lackierten Kunststoffteilen mit einem hohen Restlösungsmittelgehalt im Lack, etwa bedingt durch niedrige Trockentemperaturen, kann es vorteilhaft sein, die Basisfolie zum Zweck einer besseren Gasdurchlässigkeit zu perforieren.

Aus Gründen der besseren Verarbeitbarkeit, besonders beim Blasfolienverfahren, kann der Zusatz von Antiblockmitteln, zum Beispiel Kreide oder Talkum, vorteilhaft sein.
Eine solche Folie kann aber auch im Flachfolienextrusionverfahren oder durch Kalandrieren hergestellt werden.
Die Folie selbst kann also aus mehreren einzelnen Schichten aufgebaut sein.

Maschenwaren sind textile Flächengebilde hergestellt aus einem oder mehreren Fäden oder Fadensystemen durch Maschenbildung (Fadenschleifen), im Unterschied zu Webwaren (Geweben), bei der die Fläche durch Verkreuzen von zwei Fadensystemen (Kett- und Schußfäden) hergestellt wird und den Vliesen (Faserverbundstoffen), bei denen ein loser Faserflor durch Wärme, Nadelung, Nähen oder durch Wasserstrahlen verfestigt wird.

Maschenwaren lassen sich in Gestricke, bei denen die Fäden in Querrichtung durch das Textil laufen, und in Gewirke einteilen, bei denen die Fäden längs durch das Textil laufen. Maschenwaren sind durch ihre Maschenstruktur prinzipiell nachgiebige, anschmiegsame Textilien, weil sich die Maschen in Länge und Breite dehnen können und das Bestreben haben, in ihre Ausgangslage zurückzukehren. Sie sind bei hochwertigem Material sehr strapazierfähig.

Die Maschenware kann eine beliebige sein, vorzugsweise mit einem Flächengewicht von 10 bis 200 g/m², besonders bevorzugt von 20 bis 80 g/m², um eine gute Flexibilität auch im Verbund mit der Basisfolie zu gewährleisten. Am geeignetsten sind Typen, die besonders abriebfest und widerstandsfähig gegen Stoßbelastungen in Kombination mit der elastischen Basisfolie sind.
Beispiele geeigneter Faserrohstoffe sind synthetische Fasern aus Polymerisaten wie Polyethylen, Polypropylen sowie deren Mischungen, Polyvinylchlorid, Polyvinylidendichlorid oder Polyacrylnitril, Polykondensate wie Polyamid, auch Aramid, oder Polyester. Ebenfalls einsetzbar sind halbsynthetische Fasern wie Rayon oder natürliche Fasern wie Baumwolle, Zellwolle, Wolle oder Seide sowie Mischfasern.

Bevorzugt werden die hervorragend feuchtigkeitsbeständigen, synthetischen, thermoplastischen Fasern Polyamid, Polyester oder Polyethylen verwendet. Diese überstehen halbjährige Freibewitterungszeiten zwar im allgemeinen ausreichend, können aber im Bedarfsfall zusätzlich UV-stabilisiert werden, entweder durch Einarbeiten des Stabilisators in die Fasern oder durch Behandlung der Maschenware mit einer lichtschützenden Imprägnierung. Geeignete Lichtschutzmittel sind in der gleichen Quelle aufgeführt wie bei der Frage der Stabilisierung der Folie.

Um die Maschenware mit der Trägerfolie zu verbinden, lassen sich lösungsmittelfreie, insbesondere reaktive Kaschierkleber verwenden wie aromatische oder bevorzugt aliphatische Polyurethankleber. Ebenfalls geeignet sind alle gängigen Heißschmelz-, Dispersions- oder Lösungsmittelkleber, sofern sie die geforderte Witterungsbeständigkeit aufweisen, zum Beispiel Polyacrylate, Polyethylenvinylacetat oder epoxidhärtende Systeme. Der Kaschierkleber kann vollflächig oder partiell, insbesondere punkt- oder streifenförmig, aufgetragen sein.
Die Folie läßt sich je nach Material auch ohne Kleber mit der Maschenware durch Heißkaschieren verbinden. Im Falle der Flachfolienextrusion von Polyolefinen geringer Dichte kann man die Folie auch auf die Maschenware extrudieren und so schmelzend verbinden.

Als Polymergrundlage für Klebmassen können Elastomere wie zum Beispiel EPDM- oder EPM-Kautschuk, Polyisobutylen, Butylkautschuk, EVM (Ethylen-Vinylacetat-Copolymer), hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere verwendet werden. Da die erfindungsgemäßen Schutzfolien alterungs- und witterungsstabil sein sollen, sind instabile ungesättigte Elastomere wie Naturkautschuk, SIS, SBS, SBR oder NBR einsetzbar, scheinen aber weniger geeignet.

Es kann vorteilhaft sein, die Klebemasse zu vemetzen, um ihre Scherfestigkeit zu verbessern und somit schrumpfbedingten Masserückständen vorzubeugen. Für die Vernetzung sind die üblichen Vernetzungsmittel geeignet. Bevorzugt wird das Verfahren der Strahlenvernetzung, insbesondere mit UV- und Elektronenstrahlen. Zur Optimierung der Eigenschaften, insbesondere des Klebeverhaltens auf speziellen Lacken, kann die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutzmitteln, Vernetzungsmitteln oder Vernetzungspromotoren abgemischt sein.

Klebrigmacher zur Steigerung der adhäsiven Eigenschaften der Kleber sind beispielsweise Kohlenwasserstoffharze (zum Beispiel aus ungesättigten C₅- oder C₇-Monomeren), Terpenphenolharze, Terpenharze aus Rohstoffen wie α- oder β-Pinen, aromatische Harze wie Cumaron-Inden-Harze oder Harze aus Styrol oder α-Methylstyrol, wie Kolophonium und seine Folgeprodukte wie disproportionierte, dimerisierte oder veresterte Harze, wobei Glycole, Glycerin oder Pentaerythrit eingesetzt werden können sowie weitere wie aufgeführt in Ullmann's Enzyklopädie der technischen Chemie, Band 12, Seiten 525 bis 555 (4. Aufl.), Weinheim. Besonders geeignet sind alterungsstabile Harze ohne olefinische Doppelbindung wie zum Beispiel hydrierte Harze.

Geeignete Füllstoffe und Pigmente sind beispielsweise Ruß, Titandioxid, Calciumcarbonat, Zinkcarbonat, Zinkoxid, Silicate oder Kieselsäure.

Geeignete UV-Absorber, Lichtschutz- und Alterungsschutzmittel für die Klebemassen sind die selben, die für die Stabilisierung der Folie geeignet sind.

Optional zu verwendende Weichmacher sind beispielsweise aliphatische, cycloaliphatische und aromatische Mineralöle, Di- oder Poly-Ester der Phthalsäure, Trimellitsäure oder Adipinsäure, flüssige Kautschuke (zum Beispiel Nitril- oder Polyisoprenkautschuke), flüssige Polymerisate aus Buten und/oder Isobuten, Acrylsäureester, Polyvinylether, Flüssig- und Weichharze auf Basis der Rohstoffe zu Klebharze, Wollwachs und andere Wachse oder flüssige Silikone.

Im allgemeinen lassen sich die Klebmassen aus Lösung beschichten, wobei sich die Eigenschaften der Klebmasse nach dem Abdunsten des Lösungsmittels entfalten. In einigen Fällen kann die Klebmasse auch aus der Schmelze aufgebracht werden, wie insbesondere bei den Styrolblockcopolymeren und Polyethylenvinylacetat.

Zur Verbesserung der Haftung zwischen Folie und Kleber ist das Aufbringen einer Haftvermittlerschicht vorteilhaft. Diese besteht vorzugsweise aus Komponenten von Basisschicht und/oder Kleber. Der Haftvermittler enthält besonders bevorzugt mindestens ein Polymer, welches mindestens ein α-Olefin und ein polares Comonomer enthält. Beispiele hierfür sind lonomere, Ethylen-Vinylacetat-Copolymere, Ethylen(meth)acrylsäurecopolymere oder Maleinsäureanhydrid-modifizierte Polyolefine.
Alternativ leistet zur Verbesserung der Haftung zwischen Folie und Kleber auch eine physikalische Vorbehandlung der Folie wie Coronaentladung oder die Flammvorbehandlung gute Dienste.

Ein derartig ausgeführter erfindungsgemäßer Schutzartikel läßt sich faltenarm und somit lackverträglich auf die im allgemeinen gewölbten Oberflächen von automobilen Kunststoffanbauteilen aufbringen. Die Kombination aus flexibler Maschenware und Folie mit geringem Young'schen Modul bewirkt eine exzellente Resistenz gegen Reib- und leichte Stoßbelastungen, die die eines Gewebes analogen Flächengewichts übersteigt und die eine hohe Dichtigkeit gegen flüssige Stoffe und deren lackschädliche Einwirkungen aufweist.
Der Schutzartikel läßt sich auch nach einer anwendungstypischen Freibewitterungszeit von einem halben Jahr rückstandsfrei und ohne Delamination abziehen. Der zu schützende lackierte Kunststoffkörper weist danach keine dauerhaften Veränderungen wie Verfärbungen und irreversible Lackdeformationen auf.

Von der Lackierung bis zur Auslieferung des fertigen Fahrzeugs an den Kunden vermittelt der Schutzartikel dabei eine ausgezeichnete Schutzwirkung gegen Kratzer und versehentliches Entlangschrammen an Hindernissen.

Im folgenden soll die Erfindung anhand von Beispielen erläutert werden, ohne diese damit allerdings einschränken zu wollen.

### Beispiele

### Beispiel 1

Eine 50 µm dicke Blasfolie aus 84,7 Gewichtsteilen Polyethylen (PE-VLD, Copolymer aus Ethylen und Octen, Dichte = 0,890 g/cm³, Schmelze-Fließrate bei 190 °C / 2,16 kg (ISO 1133) = 1 g/10 min), 5 Gewichtsteilen Titandioxid, 10 Gewichtsteilen Kreide und 0,3 Gewichtsteilen Lichtschutzmittel Tinuvin 770 (Ciba-Geigy) mit einem Young'schen Modul von 40 N/mm² wurde vermittels eines Kaschierklebers auf 2 Komponenten PU-Basis mit einer Kettwirkware aus Polyamid 6/6.6 mit einem Flächengewicht von 43 g/m², mit einer Maschenzahl von 10 Maschen/cm in Maschinenlaufrichtung und 14 Maschenreihen/cm in Querrichtung kaschiert.
Auf die coronabehandeltete Rückseite des Laminates wurde eine Lösung einer Polyisobutylenmischung aus Oppanol B 10, Oppanol B 80 und Oppanol B 150 (BASF) im Verhältnis 10 : 60 : 30 in Benzin der Siedefraktion 60/95 so aufgetragen, daß nach dem Trocknen ein Klebmassefilm von 25 µm Dicke resultierte.

### Beispiel 2

Der Schutzartikel entspricht demjenigen aus Beispiel 1, allerdings wurde in Abweichung davon eine 70 µm dicke Dreischichtblasfolie aus zwei 10 µm dicken Außenschichten aus 84,7 Gewichtsteilen Polyethylen (PE-VLD, Copolymer aus Ethylen und Octen, Dichte = 0,902 g/cm³, Schmelze-Fließrate bei 190 °C / 2,16 kg (ISO 1133) = 1 g/10 min), 5 Gewichtsteilen Titandioxid und 10 Gewichtsteilen Kreide und 0,3 Gewichtsteilen Lichtschutzmittel Tinuvin 770 (Ciba-Geigy) und einer 50 µm dicken Innenschicht aus 99,7 Gewichtsteilen Polypropylen-Copolymer, (Terpolymer aus Propylen und zwei weiteren Olefinen, Dichte = 0,890 g/cm³ und Schmelze-Fließrate bei 230 °C / 2,16 kg (ISO 1133) von 0,6 g/10 min) und 0,3 Gewichtsteilen Lichtschutzmittel Tinuvin 770 mit einem Young'schen Modul von 95 N/mm² verwendet.

### Beispiel 3

Ein Folien/Maschenware-Laminat wie in Beispiel 1 beschrieben wurde vor dem Auftragen der Selbstklebemasse, deren Zusammensetzung aus Beispiel 1 entnommen werden kann, mit einer Nadelwalze mit 15 konischen Nadeln/cm² genadelt. Der Durchmesser der Löcher wurde durch die Eindringtiefe der Nadeln auf 0,5 mm eingestellt.

### Beispiel 4

Ein Schutzartikel analog zu Beispiel 1, in Abweichung davon wurde eine Kettwirkware aus Polyamid 6/6.6 mit einem Flächengewicht von 60 g/m² mit einer Maschenzahl von 14 Maschen/cm in Maschinenlaufrichtung und 14 Maschenreihen/cm in Querrichtung mit einem Flächengewicht von 60 g/m² verwendet.

### Vergleichsbeispiel 1

Der Schutzartikel entspricht demjenigen aus Beispiel 1, allerdings in Abweichung davon wurde statt der dort genannten Folie eine Folie aus Polyethylen hoher Dichte (PE-HD, Dichte = 0,963 g/cm³, Schmelze-Fließrate bei 190 °C / 2,16 kg (ISO 1133) = 0,2 g/10 min) von 50 µm Dicke mit einem Young'schen Modul von 850 N/mm² verwendet.

### Vergleichsbeispiel 2

Der Schutzartikel entspricht demjenigen aus Beispiel 1, allerdings in Abweichung davon wurde keine Maschenware zu der Basisfolie zukaschiert.

### Vergleichsbeispiel 3

Ein Baumwollgewebe (Feinheit der Faser 200 dtex, Fadenzahl Kette 30 1/cm, Fadenzahl Schuß 28 1/cm) wird mit der Lösung einer Selbstklebemasse analog zu der in Beispiel 1 beschriebenen so beschichtet, daß sich nach dem Trocknen 50 g/m² auf dem Gewebe befinden.

### Prüfkriterien

Es wurden vier anwendungstechnisch besonders relevante Kriterien für einen Schutzartikel für Kraftfahrzeugkunststoffanbauteile zur vergleichenden Beurteilung der Beispielmuster herangezogen:
1. Irreversible Lackdeformationen unter der beklebten Fläche
2. Faltigkeit der Beklebung
3. Durchriebfestigkeit
4. Schutz des Kunststoffteils gegen Chemikalien am Beispiel von Batteriesäure

Als Testhaftgrund wurden original lackierte Stoßfänger eines VW Golf IV ausgewählt, auf dessen Eckpartien, die besonders stark dreidimensional gekrümmt sind, Muster der selbstklebenden Schutzartikel von 30 cm Länge und 15 cm Höhe verklebt wurden.

### Durchführung der Tests

### 1. Lackdeformationen

Der Stoßfänger wurde mit dem Testmaterial beklebt und in einer Wärmekammer über drei Tage bei 90 °C gelagert. Nach dem Abkühlen wurde der Prüfling entfernt und die Stoßfängeroberfläche visuell auf irreversible Veränderungen der Oberflächengüte des Lackes beurteilt.

### Folgendes Punkteschema spiegelt den Grad der Lackbeeinträchtigung wider:

0 = nicht sichtbar
1 = kaum sichtbar
2 = schwach sichtbar
3 = deutlich sichtbar

### 2. Faltigkeit der Beklebung

Bei der Verklebung wurde versucht, den Prüfling möglichst faltenarm auf der gewölbten Stoßfängerecke zu positionieren.

Das Ausmaß der Faltigkeit wurde mit folgenden Schema beurteilt:
0 = faltenfrei
1 = vereinzelte Falten
2 = einige Falten
3 = zahlreiche Falten

Die Faltigkeit ist ein Maß für die zu erwartende Beeinträchtigung des Lackes unter den Hohlstellen durch mögliche Wassereinlagerung bei Feuchtigkeit und sichtbare Abdrücke durch Randwinkeleffekte.

### 3. Durchriebfestigkeit.

Der Prüfling wurde auf eine Metallplatte geklebt und in einem Abriebtestgerät mit einem runden Prüfdorn, der mit 3 kg beschwert war, solange mit einer Frequenz von 1 Hz beansprucht, bis der Dom Kontakt zur Metallplatte bekam.

Beurteilungsschema:
0 = mehr als 400 Hübe
1 = 250 bis 400 Hübe
2 = 100 bis 200 Hübe
3 = unter 100 Hübe

### 4. Chemikalienbeständigkeit.

Auf den auf dem Teststoßfänger verklebten Prüfling wurde mit einer Pipette 1 ml Batteriesäure geträufelt und der Stoßfänger sofort über 30 min bei 80°C gelagert. Anschließend wurde der Prüfling entfernt und der darunter liegende Lack auf Beeinträchtigungen geprüft.
Als Bewertungsschema für den Grad der Beeinträchtigung gilt:
0 = nicht sichtbar
1 = kaum sichtbar
2 = schwach sichtbar
3 = deutlich sichtbar

### Ergebnisübersicht

Eine geringe Gesamtpunktzahl (Spalte Σ) bedeutet ein gutes anwendungstechnisches Gesamturteil.

| | Lackdeformationen in Fläche | Faltigkeit auf 3D Oberfläche | Durchriebfestigkeit | Chemikalienbeständigkeit | Σ |
|---|---|---|---|---|---|
| Bsp. 1 | 0 | 0 | 0 | 0 | 0 |
| Bsp. 2 | 0 | 0 | 0 | 0 | 0 |
| Bsp. 3 | 0 | 0 | 0 | 1 | 1 |
| Bsp. 4 | 0 | 0 | 0 | 0 | 0 |
| Vergl. Bsp. 1 | 0 | 3 | 0 | 0 | 3 |
| Vergl. Bsp. 2 | 0 | 0 | 3 | 0 | 3 |
| Vergl. Bsp. 3 | 3 | 2 | 1 | 3 | 9 |

Die Auswertung zeigt deutlich, daß mit dem erfindungsgemäßen Produktaufbau exzellente Ergebnisse bei den entscheidenden anwendungstechnischen Tests erzielt werden.

Im Gegensatz zu den Vergleichsbeispielen handelt es sich bei den Beispielen um lackverträgliche, anschmiegsame, flüssigkeitsdichte und außerordentlich abriebfeste Schutzartikel, die daher gut geeignet sind für den zuverlässigen Schutz und Werterhalt lackierter Kunststoffanbauteile für Automobile.

## Patentansprüche

1. Selbstklebeartikel zum mechanischen Schutz von lackierten Kunststoffanbauteilen von Automobilen mit einem folienförmigen Trägermaterial, dessen Außenseite mit einer textilen Schicht aus Maschenware kaschiert ist und dessen Innenseite durch Aufbringen einer Selbstklebemasse haftklebrig ausgerüstet ist.

2. Selbstklebeartikel nach Anspruch 1, **dadurch gekennzeichnet, daß** das folienförmige Trägermaterial einen Young'schen Modul von kleiner als 300 N/mm², vorzugsweise kleiner als 150 N/mm² aufweist.

3. Selbstklebeartikel nach den Ansprüchen 1 und 2, **dadurch gekennzeichnet, daß** das folienförmige Trägermaterial eine Dicke von 10 bis 150 µm, vorzugsweise 40 bis 100 µm aufweist.

4. Selbstklebeartikel nach den Ansprüchen 1 bis 3, **dadurch gekennzeichnet, daß** das folienförmige Trägermaterial aus Polyolefinen, Polyolefinmischungen, Polyurethan und/oder Weich-PVC besteht.

5. Selbstklebeartikel nach den Ansprüchen 1 bis 4, **dadurch gekennzeichnet, daß** das folienförmige Trägermaterial mehr als 0,15 Gew.-%, vorzugsweise mehr als 0,3 Gew.-% eines Lichtschutzstabilisators enthält.

6. Selbstklebeartikel nach den Ansprüchen 1 bis 5, **dadurch gekennzeichnet, daß** das folienförmige Trägermaterial perforiert und/oder geschäumt ist.

7. Selbstklebeartikel nach den Ansprüchen 1 bis 6, **dadurch gekennzeichnet, daß** die Maschenware ein Flächengewicht von 10 bis 200 g/m², bevorzugt von 20 bis 80 g/m², aufweist.

8. Selbstklebeartikel nach den Ansprüchen 1 bis 7, **dadurch gekennzeichnet, daß** die Maschenware aus Polyamid, Polyester oder Polyethylen besteht.

9. Selbstklebeartikel nach den Ansprüchen 1 bis 8, **dadurch gekennzeichnet, daß** das Trägermaterial mit 10 bis 80 g/m², vorzugsweise mit 15 bis 40 g/m² einer Selbstklebemasse beschichtet ist.

10. Selbstklebeartikel nach den Ansprüchen 1 bis 9, **dadurch gekennzeichnet, daß** das folienförmige Trägermaterial mit der Maschenware vermittels eines Kaschierklebers verbunden ist.

11. Selbstklebeartikel nach Anspruch 10, **dadurch gekennzeichnet, daß** das folienförmige Trägermaterial mit der Maschenware vermittels eines reaktiven Kaschierklebers auf Basis eines Zweikomponentenpolyurethans verbunden ist.

12. Selbstklebeartikel nach Anspruch 10 und 11, **dadurch gekennzeichnet, daß** der Kaschierkleber vollflächig oder partiell, insbesondere punkt- oder streifenförmig, aufgetragen ist.

13. Selbstklebeartikel nach den Ansprüchen 10 bis 12, **dadurch gekennzeichnet, daß** das Basispolymer des Haftklebers Polyisobutylen oder Polyethylenvinylacetat ist.

14. Selbstklebeartikel nach den Ansprüchen 1 bis 13, **dadurch gekennzeichnet, daß** sich zwischen folienförmigem Trägermaterial und Haftkleber ein Haftvermittler befindet.

15. Verwendung des Selbstklebeartikel nach mindestens einem der vorhergehenden Ansprüche auf gewölbten Flächen auf der Außenseite von Automobilen.

16. Verwendung des Selbstklebeartikel nach mindestens einem der vorhergehenden Ansprüche auf der Lackierung von Automobilkunststoffteilen wie insbesondere Stoßfängern.
